# EUROPÄISCHE PATENTSCHRIFT

(11) **EP 1 716 403 B1**
(45) Veröffentlichungstag und Bekanntmachung des Hinweises auf die Patenterteilung: **01.12.2010**
(21) Anmeldenummer: 05706928.8
(22) Anmeldetag: 19.01.2005
(51) Int. Cl.: G01M 17/007

(54) **VERFAHREN ZUM FÜHREN EINES FAHRZEUGS LÄNGS EINER VORBESTIMMTEN BAHN SOWIE FAHRZEUG UND SYSTEM ZUM DURCHFÜHREN VON CRASH-VERSUCHEN**
METHOD FOR GUIDING A VEHICLE ALONG A PREDETERMINED PATH, AND VEHICLE AND SYSTEM FOR CARRYING OUT CRASH TESTS
PROCEDE DE GUIDAGE D'UN VEHICULE LE LONG D'UNE VOIE PREDETERMINEE, VEHICULE ET SYSTEME POUR EFFECTUER DES TESTS EN MATIERE DE COLLISION

(30) Priorität: 21.01.2004 DE 102004003087
(43) Veröffentlichungstag der Anmeldung: 02.11.2006
(73) Patentinhaber: TÜV SÜD Automotive GmbH, 80339 München (DE)
(72) Erfinder: RICHTER, Richard, 86922 Eresing (DE)
(74) Vertreter: Kramer - Barske - Schmidtchen
(86) Internationale Anmeldenummer: PCT/EP2005/000494
(87) Internationale Veröffentlichungsnummer: WO 2005/071384

(56) Entgegenhaltungen:
- EP-A- 0 445 671
- EP-A- 0 947 818
- PILUTTI TOM ET AL: "Vehicle steering intervention through differential braking" PROC AM CONTROL CONF; PROCEEDINGS OF THE AMERICAN CONTROL CONFERENCE 1995, Bd. 3, 1995, Seiten 1667-1671, XP002325942 SEATTLE, WA, USA

## Beschreibung

Die Erfindung betrifft ein längs einer vorbestimmten Bahn führbares, mehrspuriges Fahrzeug für Crash-Versuche. Die Erfindung betrifft weiter ein Verfahren zum Führen eines solchen fahrerlosen, mehrspurigen Fahrzeugs sowie ein System zum Durchführen von Crash-Versuchen unter Einsatz des erfindungsgemäßen Verfahrens und Verwendung eines solchen Fahrzeugs.

Crash-Versuche sind ein notwendiges Instrument bei der Entwicklung neuer Fahrzeuge, die zahlreiche gesetzliche Insassenschutzvorschriften erfüllen müssen und den Fahrzeuginsassen ein optimales Maß an passiver Sicherheit bieten sollen. Aus der EP 0 445 671 B2 ist ein Verfahren zum Durchführen von Crash-Versuchen bekannt, bei dem wenigstens ein fahrerloses Fahrzeug an einen vorher definierten Kollisionspunkt geführt wird, wobei das Fahrzeug unter eigenem Antrieb durch bordeigene Regelung von Geschwindigkeit und Fahrtrichtung längs eines vorbestimmten Fahrwegs bewegt wird, der von einer Leiteinrichtung vorgegeben wird. Die Lenkung des Fahrzeugs erfolgt dabei über einen Aktor, der die Lenkeinrichtung des Fahrzeugs, beispielsweise durch unmittelbaren Eingriff am Lenkrad, betätigt. Der Einbau des entsprechenden Aktors ist verhältnismäßig aufwendig; zudem ist ein Verlust des Aktors selbst infolge eines Crash-Versuchs mit nicht unerheblichen Kosten verbunden.

Aus PILUTTI TOM ET AL: "Vehicle steering intervention through differential braking", PROC AM CONTROL CONF; PROCEEDINGS OF THE AMERICAN CONTROL CONFERENCE 1995, Volume 3, 1995, Seiten 1667-1671, ist ein konventionell von einem Fahrer gesteuertes Fahrzeug bekannt, bei dem zur Unterstützung der durch den Fahrer erfolgenden Lenkung Bremsen selbsttätig derart betätigt werden, dass das Handling des Fahrzeugs verbessert wird bzw. sich das Fahrzeug derart bewegt, wie es bei der jeweiligen Lenkradbetätigung erwartet wird.

In der DE 196 05 553 C1 ist ein Lenksystem für mehrspurige Kraftfahrzeuge mit einem Hauptlenksystem und einem bei Ausfall des Hauptlenksystems einschaltbaren Notlenksystem beschrieben, das Radbremsen an unterschiedlichen Fahrzeugseiten in Abhängigkeit von der Betätigung einer Lenkhandhabe betätigt. Das Hauptlenksystem weist ein Lenkrad ohne mechanischen Durchtrieb zu lenkbaren Fahrzeugrädern auf. Das Lenkrad betätigt einen Sollwertgeber, der Teil einer dem Hauptlenksystem zugehörigen Regelstrecke ist, mittels der auf Grundlage eines Soll-Ist-Wert-Vergleiches ein Stellmotor für die Fahrzeuglenkräder betätigbar ist. Die Signale des Sollwertgebers und/oder eines parallelen Sollwertgebers steuern beim Betrieb des Notlenksystems die Radbremsen.

Der Erfindung liegt die Aufgabe zugrunde, kostengünstige Möglichkeiten zu schaffen, Crash-Versuche, bei denen wenigstens ein fahrerloses, mehrspuriges Fahrzeug unter eigenem Antrieb längs einer vorbestimmten Bahn mit an einer Crash-Stelle vorbestimmter Geschwindigkeit bewegbar ist, durchzuführen.

Die Patentansprüche sind auf unterschiedliche Lösungen der vorgenannten Aufgabe gerichtet. Dabei kennzeichnen die Patentansprüche 1, 2, 4 und 5 Fahrzeuge zur Durchführung von Crash-Versuchen. Die Ansprüche 3 und 6 sind auf Verfahren zum Führen solcher Fahrzeuge gerichtet.

Die Ansprüche 7 und 8 kennzeichnen ein System zum Durchrühren von Crash-Versuchen.

Die Erfindung kann überall dort eingesetzt werden, wo Fahrzeuge fahrerlos längs einer vorbestimmten Bahn bewegt werden sollen. Vorteilhaft ist der Einsatz der Erfindung dort, wo die Krümmungsradien der Kurven, die das Fahrzeug zu fahren hat, verhältnismäßig groß sind. Besonders gut eignet sich die Erfindung zur kostengünstigen Durchführung von Crash-Versuchen, anhand derer sie im folgenden Beispiel mit schematischen Zeichnungen erläutert wird.

In den Zeichnungen stellen dar:
Fig. 1 ein Schema einer ersten Ausführungsform eines erfindungsgemäßen Systems.
Fig. 2 ein Schema einer zweiten Ausführungsform eines erfindungsgemäßen Systems.

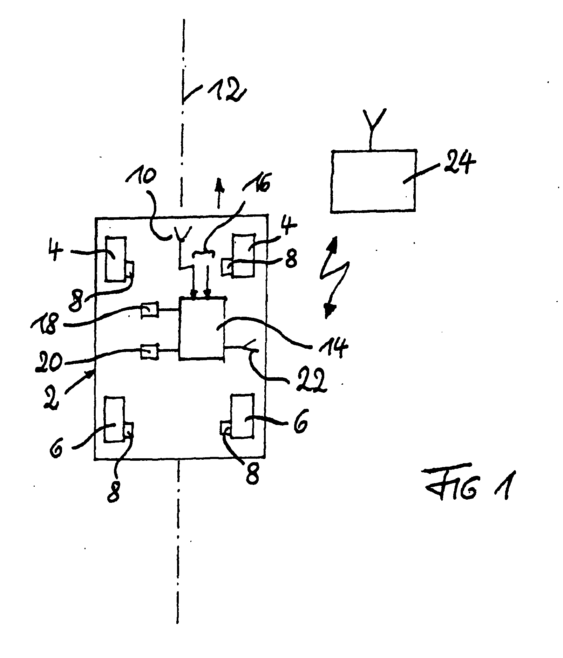

Gemäß Fig. 1 weist ein insgesamt mit 2 bezeichnetes Fahrzeug Vorderräder 4 und Hinterräder 6 auf. Das Fahrzeug kann in seinem Aufbau insgesamt bekannt sein, das heißt beispielsweise ein üblicher Personenkraftwagen mit Verbrennungsmotor, Lenkung und so weiter sein. Diese üblichen Komponenten sind nicht dargestellt. Zur Abbremsung des Fahrzeugs sind die Räder mit an sich bekannten Radbremsen 8 versehen.

Zur Führung längs einer vorbestimmten Bahn weist das Fahrzeug eine Antenne 10 auf oder eine sonstwie arbeitende, an sich bekannte Fühleinrichtung auf, mit der die Position des Fahrzeugs 2 in Seitenrichtung relativ zu einem in der Fahrbahn verlegtem Kabel erfasst werden kann. Das Fahrzeug enthält weiter eine Steuereinrichtung 14, die vorzugsweise einen Mikroprozessor mit Programm- und Datenspeichern aufweist. Eingänge 16 der Steuereinrichtung 14 sind mit der Antenne 10 und einem Signalgeber verbunden, der der Steuereinrichtung 14 ein der Fahrzeuggeschwindigkeit entsprechendes Signal zuführt. Ausgänge der Steuereinrichtung 14 sind mit Aktoren 18 für die Radbremsen 8 (es ist nur ein Aktor dargestellt) und einem Aktor 20 für die Betätigung eines Laststellgliedes der nicht dargestellten Brennkraftmaschine verbunden. Die Steuereinrichtung 14 kommuniziert über eine Antenne 22 vorteilhafterweise mit einer außerhalb des Fahrzeugs befindlichen, zentralen Leiteinrichtung 24.

Der Aufbau der beschriebenen Komponenten ist an sich bekannt, so dass deren Funktion im Einzelnen nicht beschrieben wird. Bezüglich der Einzelbetätigung der Radbremsen können die aus Fahrstabilitätskontrollsystemen mit Bremseneingriff bekannten Komponenten eingesetzt und angesteuert werden. Im Folgenden wird die Funktion des Gesamtsystems beispielhaft beschrieben.

Sei angenommen, mit dem Fahrzeug 2 soll ein Aufprall auf ein an einer bestimmten Stelle der durch das Kabel 12 gekennzeichneten Bahn angeordnetes Hindernis mit vorbestimmter Geschwindigkeit durchgeführt werden.

Einem Datenspeicher der Steuereinrichtung 14 werden dann über eine fahrzeugfeste Dateneingabeeinrichtung unmittelbar oder über die Leiteinrichtung 24 entsprechende Daten eingegeben, nämlich im beschriebenen Beispiel die Geschwindigkeit, mit der das Fahrzeug 2 auf das Hindernis auftreffen soll.

Das Fahrzeug wird dann vorzugsweise von der Leiteinrichtung 24 aus in Betrieb gesetzt, wobei der Aktor 20 des Laststellgliedes derart betätigt wird, dass das Fahrzeug bereits vor dem Hindernis auf die vorbestimmte Geschwindigkeit beschleunigt, die mit Hilfe der Steuereinrichtung 14 und der einem Eingang der Steuereinrichtung 14 zugeführten tatsächlichen Fahrzeuggeschwindigkeit auf dem vorbestimmten Wert gehalten wird. Das Fahrzeug fahrt beispielsweise mit in geradeaus Stellung der Vorderräder blockierter Lenkung. Bei einer Abweichung der zurück gelegten Ist-Bahn von der durch das Kabel gegebenen Soll-Bahn werden über die Aktoren 18 die Radbremsen 8 derart betätigt, dass die Abweichung zwischen Ist-Bahn und Soll-Bahn abnimmt und sich das Fahrzeug längs der Soll-Bahn, das heißt derart bewegt, dass sich die Antenne 10 innerhalb eines vorbestimmten Fensters über dem Kabel 12 befindet. Wenn die Ist-Position des Fahrzeugs von dessen SollPosition beispielsweise gemäß Figur 1 nach links abweicht, wird die Radbremse 8 des rechten Vorderrades betätigt, wodurch das Fahrzeug nach rechts kurvt. Es versteht sich, dass auch beide rechtsseitige Bremsen oder nur die Bremse des rechten Hinterrades betätigt werden kann. Vorteilhafterweise wird bei einer Betätigung einer oder mehrerer Radbremsen für eine Richtungskorrektur das Laststellglied der Brennkraftmaschine weiter geöffnet, so dass das zusätzliche Antriebsmoment der Brennkraftmaschine das Bremsmoment ausgleicht und die Fahrzeuggeschwindigkeit konstant bleibt. Der Zusammenhang zwischen Bremsbetätigung und notwendiger zusätzlicher Öffnung beispielsweise einer Drosselklappe kann in einem Kennfeld gespeichert sein, das in den Datenspeicher der Steuereinrichtung 14 abgelegt ist.

Die Lenkung muss nicht zwingend in Geradeaus-Stellung blockiert sein. Bei ausreichendem eigenen Rückstellmoment kann eine Blockierung mit der dazu erforderlichen Einrichtung entfallen, wodurch Kosten gesenkt werden. Es sind auch Versuche mit auf einem vorbestimmten Einschlag blockierender Lenkung möglich, so dass das Fahrzeug sich ohne unterschiedliches Antriebsmoment auf seinen Seiten längs einer gekrümmten Bahn bewegt.

Wenn mit dem erfindungsgemäßen System eine Fahrzeugkollision Fahrzeug gegen Fahrzeug durchgeführt werden soll, können unter Steuerung der Leiteinrichtung 24 zwei Fahrzeuge sich auf dem Leitkabel 12 in vorbestimmter Weise aufeinander zu bewegen, wobei, falls der Kollisionsort vorbestimmt sein soll, auch die Zeitpunkte überwacht werden, zu denen die aufeinander zufahrenden Fahrzeuge sich jeweils an vorbestimmten Positionen der Strecke befinden. Dies kann dadurch geschehen, dass das Kabel selbst mit elektronischen Marken versehen ist, dass längs der Strecke Marken vorgesehen sind, oder dass die Position der Fahrzeuge von der Leiteinrichtung 24 in an sich bekannter Weise telemetrisch erfasst wird.

Durch entsprechende Ausbildung und Anbringung der Antenne 10 kann das Fahrzeug mit einem vorbestimmten seitlichen Versatz zu dem Kabel 12 geführt werden, so dass mit Hilfe nur eines Kabels Crash-Versuche mit unterschiedlicher Fahrzeugüberdeckung durchgeführt werden können. Es versteht sich weiter, dass Fahrzeuge auch längs unterschiedlicher Kabel aufeinander zu bewegt werden können.

Die im dargestellten Beispiel durch das Kabel 12 vorgegebene Bahn kann durch unterschiedlichste andere Einrichtungen ersetzt werden, beispielsweise eine optische Kennzeichnung auf der Bahn, wie einen weißen Strich, dessen Lage von optischen Sensoren des Fahrzeugs ausgewertet wird, einen Leitstrahl, der von auf den jeweiligen Frequenzbereich abgestimmten Sensoren abgetastet wird, beispielsweise auch einen Laserstrahl und so weiter. Die Verwendung eines Laserstrahls hat naturgemäß den Nachteil, dass die vorgegebene Bahn geradlinig ist.

Das Fahrzeug kann in unterschiedlichster Weise ausgebildet sein; Bedingung für seine Tauglichkeit für das erfindungsgemäße Verfahren ist, dass es derart gebremst werden kann, dass es "schief zieht", das heißt seine Richtung ändert, ohne dass die Räder von einer gesonderten Lenkeinrichtung um eine etwa senkrechte Achse geschenkt werden. Es versteht sich, dass die Bremsen derart ausgebildet sind, dass das Fahrzeug bei einem Eintreten unvorhergesehener Ereignisse von der Leiteinrichtung 24 her stillgesetzt werden kann. Die erfindungsgemäße Art der "Lenkung" kann auch dann eingesetzt werden, wenn das Fahrzeug nicht über einen eigenen Antrieb erfolgt, sondern beispielsweise an einem Seil gezogen wird, bergab rollt und so weiter.

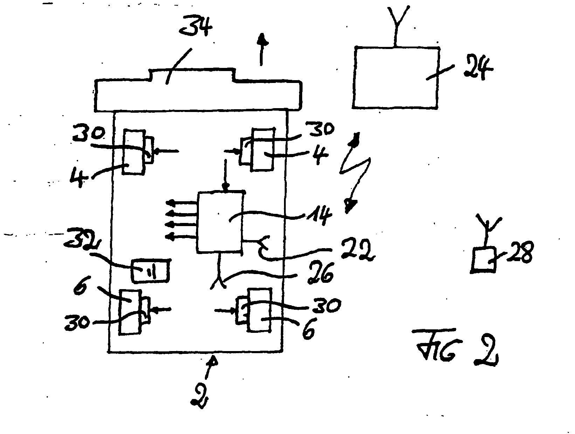

Figur 2 stellt eine abgeänderte Ausführungsform des erfindungsgemäßen Systems dar, bei der die vorgegebene Bahn dadurch gegeben ist, dass in der Steuereinrichtung 14 eine Bahn in Form einer Folge geografischer Daten gespeichert ist, deren Einhaltung mit Hilfe eines an sich bekannten elektronischen Navigationssystems überwacht werden kann. Außerordentlich hohe Genauigkeiten werden mit einem sogenannten DGPS System erzielt, bei dem eine GPS Antenne 26 des Fahrzeugs Satellitendaten und Daten von einem zusätzlichen ortsfesten Sender 28 in an sich bekannter Weise auswertet. Im dargestellten Beispiel ist das an sich bekannte Satellitennavigationssystem in die Steuereinrichtung 14 integriert. Das Satellitennavigationssystem kann alternativ als eigene Einheit an die Steuereinrichtung 14 angeschlossen sein. Es versteht sich, dass bei Führung des Fahrzeugs mit Hilfe eines Satellitennavigationssystems die Antenne 10 (Figur 1) fehlen kann. Das Navigationssystem muss nicht zwingend ein Satellitennavigationssystem sein; es kann ganz allgemein ein System sein, bei dem die jeweilige Position des Fahrzeugs relativ zu Bezugspunkten ermittelt wird, wobei das Fahrzeug einer vorgegebenen Bahn folgt, deren Koordinatenfolge, bezogen auf das Bezugssystem, festlegt.

Ein weiterer Unterschied des Systems der Figur 2 im Vergleich dem zu Figur 1 liegt darin, dass jedes Fahrzeugrad von einem eigenen Motor 30, beispielsweise elektrischem Nabenmotor angetrieben wird, wobei die Nabenmotoren von einer Batterie 32 gespeist werden. Die Steuereinrichtung 14 steuert den Betrieb der Nabenmotoren 30 derart, dass das Fahrzeug 2 sich längs der elektronisch vorgegebenen Bahn mit einer vorbestimmten Geschwindigkeit bewegt, wobei Abweichungen von der Bahn durch entsprechende Änderung der Drehmomente durchgeführt werden, die auf die linksseitigen und rechtsseitigen Fahrzeugräder von den Nabenmotoren 30 aufgebracht werden. Bei einer Abweichung des Fahrzeugs von der vorgegebenen Bahn nach rechts treibt beispielsweise der rechtsseitige vordere Nabenmotor 30 stärker an und/oder bremst der linksseitige vordere Nabenmotor 30. Die Bremsung durch den oder die Nabenmotoren auf einer Seite kann gleich groß sein wie der zusätzliche Antrieb durch den oder die Nabenmotoren der anderen Seite, so dass sich der Vortrieb des Fahrzeugs insgesamt und damit dessen Geschwindigkeit nicht ändert.

Es versteht sich, dass an Stelle elektrischer Nabenmotoren auch hydraulische, pneumatische oder sonstige Motoren verwendet werden können, die von entsprechenden Energiequellen mit Energie versorgt werden.

Im dargestellten Beispiel ist das Fahrzeug 2 beispielsweise ein einfacher Träger mit nicht lenkbaren beziehungsweise schwenkbaren Rädern, der an seiner Vorderseite eine Barriere 34 zum Durchführen von Seiten Crash-Versuchen auf ein stehendes Fahrzeug trägt.

Bei entsprechender Bauweise der Nabenmotoren 30 können gesonderte Bremsen entfallen. Vorteilhaft weist das Fahrzeug gemäß Figur 2 jedoch ebenfalls Radbremsen auf, die insbesondere im Stillstand angelegt sind.

Es versteht sich, dass Merkmale der Ausführungsform gemäß Figur 1 mit denen der Ausführungsform gemäß Figur 2 kombiniert werden können und dass zahlreiche Abwandlungen im Rahmen des durch die Ansprüche definierten Schutzbereiches der beispielhaft dargestellten Ausführungsformen möglich sind.

Die zur Ansteuerung der jeweiligen Aktoren erforderlichen Signale werden von Rechnern entsprechend Steuerverfahren (zum Beispiel Einstellen einer vorbestimmten Geschwindigkeit bei einem einfachen Aufprallcrash auf ein starres Hindernis) und/oder Regelverfahren (Abweichung von der vorbestimmten nach Seite und/oder vorgegebener zeitlicher Position) ermittelt. Die jeweiligen Berechnungen können in einem fahrzeugfesten Rechner und/oder in der zentralen Leiteinrichtung 24 erfolgen.

### Bezugszeichenliste

- 2: Fahrzeug
- 4: Vorderrad
- 6: Hinterrad
- 8: Radbremse
- 10: Antenne
- 12: Kabel
- 14: Steuereinrichtung
- 16: Eingänge
- 18: Aktor
- 20: Aktor
- 22: Antenne
- 24: Leiteinrichtung
- 26: GPS-Antenne
- 28: Sender
- 30: Motor
- 32: Batterie
- 34: Barriere

## Patentansprüche

1. Längs einer vorbestimmten Bahn führbares, mehrspuriges Fahrzeug für Crash-Versuche, enthaltend
a) wenigstens eine Antriebsvorrichtung (30) zum Antreiben wenigstens eines Fahrzeugrades,
b) eine Bremsvorrichtung (8; 30) zum selektiven Bremsen wenigstens zweier auf verschiedenen Seiten des Fahrzeugs angeordneter Räder (4, 6),
c) eine Lenkvorrichtung zur Veränderung der Fahrtrichtung des Fahrzeugs,
d) eine Führungseinrichtung (10, 14) zum Ermitteln einer Abweichung zwischen einer vorgegebenen Bahn (12) und einer Ist-Bahn und
e) eine Steuereinrichtung (14) zum Steuern des Betriebs des Fahrzeugs derart, dass sich das Fahrzeug längs einer vorbestimmten und mit am Hindernis vorgegebener Bahn Geschwindigkeit bewegt,
**dadurch gekennzeichnet, dass**
f) die Lenkvorrichtung durch die Bremsvorrichtung (8; 30) gebildet ist, die bei einer Abweichung zwischen der Ist-Bahn und der vorbestimmten Bahn die Räder (4, 6) derart bremst, dass die Abweichung zwischen der Ist-Bahn und der vorbestimmten Bahn minimiert wird, und
g) dass das Fahrzeug ausgestaltet ist, dass ein Antriebsmoment des Fahrzeugs entsprechend dem Bremsmoment erhöht wird, so dass sich die Geschwindigkeit des Fahrzeugs durch einen lenkenden Bremseingriff nicht verändert.

2. Fahrzeug nach Anspruch 1, **dadurch gekennzeichnet, dass** das Fahrzeug (2) eine Barriere (34) für eine Kollision mit einem anderen Fahrzeug trägt.

3. Verfahren zum Führen eines fahrerlosen, mehrspurigen Fahrzeugs gemäß Anspruch 1 oder 2 längs einer vorbestimmten Bahn, welches Fahrzeug auf in seiner Breitenrichtung voneinander entfernten Rädern (4, 6) rollt, wobei das Fahrzeug derart gelenkt wird, dass es der vorgegebenen Bahn folgt,
**dadurch gekennzeichnet, dass**
das Fahrzeug durch Veränderung des an wenigstens einem seiner Räder (4, 6) wirksamen Drehmoments gelenkt wird, indem das wenigstens eine Rad gebremst wird und
dass ein Antriebsmoment des Fahrzeugs entsprechend dem Bremsmoment erhöht wird, so dass sich die Geschwindigkeit des Fahrzeugs durch einen lenkenden Bremseingriff nicht verändert.

4. Längs einer vorbestimmten Bahn führbares, mehrspuriges Fahrzeug für Crash-Versuche, enthaltend
a) wenigstens eine Antriebsvorrichtung (30) zum Antreiben wenigstens eines Fahrzeugrades,
b) eine Bremsvorrichtung (8; 30) zum selektiven Bremsen wenigstens zweier auf verschiedenen Seiten des Fahrzeugs angeordneter Räder (4, 6),
c) eine Lenkvorrichtung zur Veränderung der Fahrtrichtung des Fahrzeugs,
d) eine Führungseinrichtung (10, 14) zum Ermitteln einer Abweichung zwischen einer vorgegebenen Bahn (12) und einer Ist-Bahn und
e) eine Steuereinrichtung (14) zum Steuern des Betriebs des Fahrzeugs derart, dass sich das Fahrzeug längs einer vorbestimmten Bahn und mit am Hindernis vorgegebener Geschwindigkeit bewegt,
**dadurch gekennzeichnet, dass**
f) die Antriebsvorrichtung, die Bremsvorrichtung und die Lenkvorrichtung durch wenigstens zwei selektiv ansteuerbare Motoren (30) gebildet sind, die ausgestaltet sind, die auf verschiedenen Seiten des Fahrzeugs angeordnete Räder (4, 6) anzutreiben und von der Steuereinrichtung (14) derart angesteuert zu werden, dass bei einer Abweichung zwischen vorbestimmter Bahn und Ist-Bahn durch selektive Veränderung der an den Rädern wirkenden Momente das Fahrzeug seine Richtung derart ändert, dass die Abweichung abnimmt und
g) dass die Antriebsmomente der Motoren (30) derart verändert werden, dass das Gesamtantriebsmoment des Fahrzeugs bei einem Lenkeingriff konstant bleibt.

5. Fahrzeug nach Anspruch 4, **dadurch gekennzeichnet, dass** das Fahrzeug (2) eine Barriere (34) für eine Kollision mit einem anderen Fahrzeug trägt.

6. Verfahren zum Führen eines fahrerlosen, mehrspurigen Fahrzeugs gemäß Anspruch 4 oder 5 längs einer vorbestimmten Bahn, welches Fahrzeug auf in seiner Breitenrichtung voneinander entfernten Rädern (4, 6) rollt, wobei das Fahrzeug derart gelenkt wird, dass es der vorgegebenen Bahn folgt,
**dadurch gekennzeichnet, dass**
das Fahrzeug durch Veränderung des an wenigstens einem seiner Räder wirksamen Drehmoment gelenkt wird, indem wenigstens zwei auf verschiedenen Seiten des Fahrzeugs angeordnete Räder (4, 6) von eigenen Motoren (30) angetrieben werden, deren Antriebsmoment zum Lenken des Fahrzeugs verändert wird und
dass die Antriebsmomente der Motoren (30) derart verändert werden, dass das Gesamtantriebsmoment des Fahrzeugs bei einem Lenkeingriff konstant bleibt.

7. System zum Durchführen von Crash-Versuchen unter Einsatz des Verfahrens nach einem der Ansprüche 3 oder 6 unter Verwendung wenigstens eines Fahrzeugs nach einem der Ansprüche 1, 2 oder 4, 5 enthaltend
a) eine Leiteinrichtung (12) zum Vorgeben einer vorbestimmten Bahn und
b) eine mit dem Fahrzeug zusammenwirkende Geschwindigkeitssteuereinrichtung zum Steuern der Fahrzeuggeschwindigkeit derart, dass es der vorbestimmten Bahn mit einem vorbestimmten Geschwindigkeitsverlauf folgt.

8. System nach Anspruch 7, **dadurch gekennzeichnet, dass** die Leiteinrichtung eine durch Entfernungsmessung zu vorbestimmten Bezugsorten arbeitende Navigationseinrichtung enthält.

## Claims

1. A multi-track vehicle for crash tests, which is guidable along a predetermined path, comprising
a) at least one drive device (30) for driving at least one vehicle wheel,
b) a braking device (8; 30) for selectively braking at least two wheels (4, 6) disposed on different sides of the vehicle,
c) a steering device for changing the driving direction of the vehicle,
d) a guiding device (10, 14) for determining a deviation between a predetermined path (12) and an actual path, and
e) a control device (14) for controlling the operation of the vehicle such that the vehicle moves along a predetermined path and at a preset speed at the obstacle,
**characterized in that**
f) the steering device is formed by the braking device (8; 30) which, in case of a deviation between the actual path and the predetermined path, brakes such that the deviation between the actual path and the predetermined path is minimized, and
g) **in that** the vehicle is constructed such that a drive torque of the vehicle is increased according to the braking torque, so that the vehicle speed is not changed by a steering braking intervention.

2. The vehicle according to claim 1, **characterized in that** the vehicle (2) supports a barrier (34) for a collision with another vehicle.

3. A method for guiding a driverless, multi-track vehicle according to claim 1 or 2 along a predetermined path, said vehicle rolling on wheels (4, 6) that are spaced from each other in its width direction, wherein the vehicle is steered such that it follows the predetermined path, **characterized in that**
the vehicle is steered by changing the torque acting on at least one of its wheels (4, 6) by braking the at least one wheel, and
**in that** a drive torque of the vehicle is increased according to the braking torque, so that the vehicle speed is not changed by a steering braking intervention.

4. A multi-track vehicle for crash tests, which is guidable along a predetermined path, comprising
a) at least one drive device (30) for driving at least one vehicle wheel,
b) a braking device (8; 30) for selectively braking at least two wheels (4, 6) disposed on different sides of the vehicle,
c) a steering device for changing the driving direction of the vehicle,
d) a guiding device (10, 14) for determining a deviation between a predetermined path (12) and an actual path, and
e) a control device (14) for controlling the operation of the vehicle such that the vehicle moves along a predetermined path and at a preset speed at the obstacle,
**characterized in that**
f) the drive device, the braking device, and the steering device are formed by at least two selectively controllable motors (30), which are formed to drive the wheels (4, 6) arranged at different sides of the vehicle, and to be controlled such by the control device (14) that, in case of a deviation between the predetermined path and the actual path, the driving direction of the vehicle is changed by selectively changing the torques acting on the wheels such that the deviation decreases, and
g) **in that** the drive torques of the motors (30) are changed such that the total drive torque of the vehicle remains constant in case of a steering intervention.

5. The vehicle according to claim 4, **characterized in that** the vehicle (2) supports a barrier (34) for a collision with another vehicle.

6. A method for guiding a driverless, multi-track vehicle according to claim 4 or 5 along a predetermined path, said vehicle rolling on wheels (4, 6) that are spaced from each other in its width direction, the vehicle being steered such that it follows the predetermined path, **characterized in that**
the vehicle is steered by changing the torque acting on at least one of its wheels, by driving at least two wheels (4, 6) arranged on different sides of the vehicle by their respective motors (30) whose drive torque is changed for steering the vehicle, and
**in that** the drive torques of the motors (30) are changed such that the total drive torque of the vehicle remains constant in case of a steering intervention.

7. A system for carrying out crash tests by using the method according to one of claims 3 or 6, or at least by using a vehicle according to one of claims 1, 2 or 4, 5, comprising
a) a guiding device (12) for presetting a predetermined path, and
b) a speed control device interacting with the vehicle, for controlling the vehicle speed such that it follows the predetermined path with a preset speed course.

8. The system according to claim 7, **characterized in that** the guiding device comprises a navigation device whose operation is based on measuring the distance from predetermined reference locations.

## Revendications

1. Véhicule multipiste guidable le long d'une voie prédéterminée pour essais de crash, comportant :
a) au moins un dispositif d'entraînement (30) pour entraîner au moins une roue du véhicule,
b) un dispositif de freinage (8 ; 30) pour freiner sélectivement au moins deux roues (4, 6) agencées sur des côtés différents du véhicule,
c) un dispositif de direction pour modifier la direction de conduite du véhicule,
d) un dispositif de guidage (10, 14) pour déterminer un écart entre une voie prédéfinie (12) et une voie réelle, et
e) un dispositif de commande (14) pour commander le fonctionnement du véhicule de sorte que le véhicule se déplace le long d'une voie prédéterminée et à une vitesse prédéfinie sur l'obstacle,
**caractérisé en ce que**
f) le dispositif de direction est formé par le dispositif de freinage (8 ; 30) qui, lors d'un écart entre la voie réelle et la voie prédéterminée, freine les roues (4, 6) de manière à minimiser l'écart entre la voie réelle et la voie prédéterminée, et
g) le véhicule est conçu de sorte qu'un couple d'entraînement du véhicule soit augmenté en fonction du couple de freinage pour que la vitesse du véhicule ne soit pas modifiée par une intervention de freinage directionnelle.

2. Véhicule selon la revendication 1, **caractérisé en ce que** le véhicule (2) porte une barrière (34) pour une collision avec un autre véhicule.

3. Procédé de guidage d'un véhicule multipiste sans conducteur selon la revendication 1 ou 2 le long d'une voie prédéterminée, lequel véhicule roule sur des roues (4, 6) éloignées l'une de l'autre dans le sens de sa largeur, le véhicule étant dirigé de manière à suivre la voie prédéfinie,
**caractérisé en ce que**
le véhicule est dirigé par modification du couple de rotation efficace sur au moins une de ses roues (4, 6) en freinant la au moins une roue et **en ce qu'**un couple d'entraînement du véhicule est augmenté en fonction du couple de freinage de sorte que la vitesse du véhicule ne soit pas modifiée par une intervention de freinage directionnelle.

4. Véhicule multipiste guidable le long d'une voie prédéterminée pour essais de crash, comportant :
a) au moins un dispositif d'entraînement (30) pour entraîner au moins une roue du véhicule,
b) un dispositif de freinage (8 ; 30) pour freiner sélectivement au moins deux roues (4, 6) agencées sur des côtés différents du véhicule,
c) un dispositif de direction pour modifier la direction de conduite du véhicule,
d) un dispositif de guidage (10, 14) pour déterminer un écart entre une voie prédéfinie (12) et une voie réelle, et
e) un dispositif de commande (14) pour commander le fonctionnement du véhicule de sorte que le véhicule se déplace le long d'une voie prédéterminée et à une vitesse prédéfinie sur l'obstacle,
**caractérisé en ce que**
f) le dispositif d'entraînement, le dispositif de freinage et le dispositif de direction sont formés par au moins deux moteurs (30) à commande sélective, qui sont conçus pour faire avancer des roues (4, 6) agencées en différents côtés du véhicule et pour être commandés par le dispositif de commande (14) de sorte que, lors d'un écart entre la voie prédéterminée et la voie réelle, le véhicule modifie sa direction par modification sélective des couples agissant sur les roues pour que l'écart diminue, et
g) les couples d'entraînement des moteurs (30) sont modifiés de sorte que le couple d'entraînement total du véhicule reste constant lors d'une intervention directionnelle.

5. Véhicule selon la revendication 4, **caractérisé en ce que** le véhicule (2) porte une barrière (34) pour une collision avec un autre véhicule.

6. Procédé de guidage d'un véhicule multipiste sans conducteur selon la revendication 4 ou 5 le long d'une voie prédéterminée, lequel véhicule roule sur des roues (4, 6) éloignées l'une de l'autre dans le sens de sa largeur, le véhicule étant dirigé de manière à suivre la voie prédéfinie,
**caractérisé en ce que**
le véhicule est dirigé par modification du couple de rotation efficace sur au moins une de ses roues en entraînant au moins deux roues (4, 6) agencées sur différents côtés du véhicule par des moteurs propres (30), dont le couple d'entraînement est modifié pour diriger le véhicule, et
les couples d'entraînement des moteurs (30) sont modifiés de sorte que le couple d'entraînement total du véhicule reste constant lors d'une intervention directionnelle.

7. Système pour réaliser des essais de crash en mettant en oeuvre le procédé selon l'une quelconque des revendications 3 ou 6 en utilisant au moins un véhicule selon l'une quelconque des revendications 1, 2 ou 4, 5, comportant :
a) un dispositif de guidage (12) pour prédéfinir une voie prédéterminée, et
b) un dispositif de commande de vitesse coopérant avec le véhicule pour commander la vitesse du véhicule de sorte qu'il suive la voie prédéterminée avec une évolution de vitesse prédéterminée.

8. Système selon la revendication 7, **caractérisé en ce que** le dispositif de guidage comporte un dispositif de navigation opérant par mesure d'éloignement par rapport à des points de référence prédéterminés.
